# EUROPEAN PATENT APPLICATION

(11) **EP 4 543 094 A1**
(43) Date of publication of application: **23.04.2025**
(21) Application number: 22946196.7
(22) Date of filing: 15.06.2022
(51) Int. Cl.: H04W 52/02

(54) **WIRELESS COMMUNICATION METHOD, TERMINAL DEVICE, AND NETWORK DEVICE**

(71) Applicant: GUANGDONG OPPO MOBILE TELECOMMUNICATIONS CORP., LTD., Dongguan, Guangdong 523860 (CN)
(72) Inventor: HE, Chuanfeng, Dongguan, Guangdong 523860 (CN); XU, Weijie, Dongguan, Guangdong 523860 (CN)
(74) Representative: RGTH
(86) International application number: PCT/CN2022/099000
(87) International publication number: WO 2023/240502

(57) **Abstract**

Embodiments of the present application provide a method of wireless communication, a terminal device and a network device, which specify specific parameters included in related configuration of a wake up signal, thus, a terminal device can receive the wake up signal based on the related configuration of the wake up signal by using a wake up receiver. The method of wireless communication includes: receiving, by a terminal device, first information; where the first information includes at least one of: power information of a wake up signal, spatial information of the wake up signal, a transmission parameter of the wake up signal or time-frequency resource information of the wake up signal; and the first information is used for the terminal device to receive the wake up signal by using a wake up receiver.

## Description

### TECHNICAL FIELD

Embodiments of the present application relate to the field of communication, and more particularly, to a method of wireless communication, a terminal device, and a network device.

### BACKGROUND

In a new radio (NR) system, a way of receiving a wake up signal (WUS) based on a wake up receiver (WUR) is introduced, and this way has characteristics with extremely low cost, extremely low complexity and extremely low power consumption. Before a wake up receiver of a terminal device receives a wake up signal, it is necessary to obtain related configuration of the wake up signal, to determine enable of the wake up receiver and reception of the wake up signal. However, what parameters are specifically included in the related configuration of the wake up signal is a problem that needs to be solved.

### SUMMARY

Embodiments of the present application provide a method of wireless communication, a terminal device and a network device, which specify specific parameters included in related configuration of a wake up signal, thus, a terminal device can receive the wake up signal based on the related configuration of the wake up signal by using a wake up receiver.

In a first aspect, a method of wireless communication is provided, and the method includes:
receiving, by a terminal device, first information;
where the first information includes at least one of: power information of a wake up signal, spatial information of the wake up signal, a transmission parameter of the wake up signal or time-frequency resource information of the wake up signal; and
the first information is used for the terminal device to receive the wake up signal by using a wake up receiver.

In a second aspect, a method of wireless communication is provided, and the method includes:
transmitting, by a network device, first information;
where the first information includes at least one of: power information of a wake up signal, spatial information of the wake up signal, a transmission parameter of the wake up signal or time-frequency resource information of the wake up signal; and
the first information is used for a terminal device to receive the wake up signal by using a wake up receiver.

In a third aspect, a terminal device is provided to perform the method in the above first aspect.

Specifically, the terminal device includes a functional module to perform the method in the above first aspect.

In a fourth aspect, a network device is provided to perform the method in the above second aspect.

Specifically, the network device includes a functional module to perform the method in the above second aspect.

In a fifth aspect, a terminal device is provided, including a processor and a memory. The memory is configured to store a computer program, and the processer is configured to call the computer program stored in the memory and run the computer program, to cause the terminal device to perform the method in the above first aspect.

In a sixth aspect, a network device is provided, including a processor and a memory. The memory is configured to store a computer program, and the processer is configured to call the computer program stored in the memory and run the computer program, to cause the network device to perform the method in the above second aspect.

In a seventh aspect, an apparatus is provided to implement the method in any one of the above first to second aspects.

Specifically, the apparatus includes a processor, and the processer is configured to call a computer program from a memory and run the computer program, to cause a device equipped with the apparatus to perform the method in any one of the above first to second aspects.

In an eighth aspect, a computer readable storage medium is provided, which is configured to store a computer program, and the computer program causes a computer to perform the method in any one of the above first to second aspects.

In a ninth aspect, a computer program product is provided, including computer program instructions. The computer program instructions cause a computer to perform the method in any one of the above first to second aspects.

In a tenth aspect, a computer program is provided. The computer program, when running on a computer, causes the computer to perform the method in any one of the above first to second aspects.

Through above technical solutions, it is specified that the related configuration of the wake up signal may include at least one of: the power information of the wake up signal, the spatial information of the wake up signal, the transmission parameter of the wake up signal or the time-frequency resource information of the wake up signal. Thus, the terminal device can receive the wake up signal based on the related configuration of the wake up signal by using the wake up receiver.

### BRIEF DESCRIPTION OF THE DRAWINGS

FIG. 1 is a schematic diagram of a communication system architecture applied by embodiments of the present application.
FIG. 2 is a schematic diagram of a DRX cycle provided by the present application.
FIG. 3 is a schematic diagram of a power saving signal provided by the present application.
FIG. 4 is a schematic diagram of a PF and a PO provided by the present application.
FIG. 5 is a schematic diagram of which a power saving signal indicates monitoring a PDDCH provided by the present application.
FIG. 6 is a schematic diagram of a wake up receiver and a primary receiver provided by the present application.
FIG. 7 is a schematic diagram of an OOK modulation provided by the present application.
FIG. 8 is a schematic flowchart of a method of wireless communication provided according to embodiments of the present application.
FIG. 9 is a schematic diagram of a base station transmitting a wireless signal through a beam provided according to embodiments of the present application.
FIG. 10 is a schematic diagram of a WUS having a QCL relationship with an SSB provided according to embodiments of the present application.
FIG. 11 is a schematic diagram of a frequency domain reference point and frequency domain offset provided according to embodiments of the present application.
FIG. 12 is a schematic diagram of a frequency domain signal bandwidth provided according to embodiments of the present application.
FIG. 13 is a schematic diagram of a WUS frequency domain provided according to embodiments of the present application.
FIG. 14 is a schematic diagram of another WUS frequency domain provided according to embodiments of the present application.
FIG. 15 is a schematic block diagram of a terminal device provided according to embodiments of the present application.
FIG. 16 is a schematic block diagram of a network device provided according to embodiments of the present application.
FIG. 17 is a schematic block diagram of a communication device provided according to embodiments of the present application.
FIG. 18 is a schematic block diagram of an apparatus provided according to embodiments of the present application.
FIG. 19 is a schematic block diagram of a communication system provided according to embodiments of the present application.

### DETAILED DESCRIPTION

Technical solutions of the embodiments of the present application will be described below in conjunction with the accompanying drawings in the embodiments of the present application. It is apparent that the described embodiments are merely some but not all of embodiments of the present application. With respect to the embodiments of the present application, all other embodiments obtained by those skilled in the art without creative effort fall within the protection scope of the present application.

The technical solutions of the embodiments of the present application may be applied to various communication systems, such as, a global system of mobile communication (GSM) system, a code division multiple access (CDMA) system, a wideband code division multiple access (WCDMA) system, a general packet radio service (GPRS), a long term evolution (LTE) system, an advanced long term evolution (LTE-A) system, a new radio (NR) system, an evolution system of an NR system, an LTE-based access to unlicensed spectrum (LTE-U) system, an NR-based access to unlicensed spectrum (NR-U) system, a non-terrestrial communication network (Non-Terrestrial Networks, NTN) system, a universal mobile telecommunication system (UMTS), a wireless local area network (WLAN), internet of things (IoT), wireless fidelity (WiFi), a fifth-generation communication (5th-Generation, 5G) system, or other communication systems.

Generally speaking, traditional communication systems support a limited number of connections which are easy to be implemented. However, with development of the communication technology, mobile communication systems will support not only the traditional communication, but also, for example, device to device (D2D) communication, machine to machine (M2M) communication, machine type communication (MTC), vehicle to vehicle (V2V) communication, sidelink (SL) communication, vehicle to everything (V2X) communication. The embodiments of the present application may also be applied to these communication systems.

In some embodiments, a communication system in the embodiments of the present application may be applied to a carrier aggregation (CA) scenario, may also be applied to a dual connectivity (DC) scenario, and may also be applied to a standalone (SA) network deployment scenario, or applied to a non-standalone (NSA) network deployment scenario.

In some embodiments, the communication system in the embodiments of the present application may be applied to an unlicensed spectrum, where the unlicensed spectrum may also be considered as a shared spectrum; or the communication system in the embodiments of the present application may also be applied to a licensed spectrum, where the licensed spectrum may also be considered as an unshared spectrum.

In some embodiments, the communication system in the embodiments of the present application may be applied to a frequency band of FR1 (corresponding to a frequency band range of 410 MHz to 7.125 GHz), may also be applied to a frequency band of FR2 (corresponding to a frequency band range of 24.25 GHz to 52.6 GHz), and may also be applied to new frequency bands, such as, high frequency bands corresponding to a frequency band range of 52.6 GHz to 71 GHz or a frequency band range of 71 GHz to 114.25 GHz.

In the embodiments of the present application, each embodiments will be described in conjunction with a network device and a terminal device, where the terminal device may also be referred to as a user equipment (UE), an access terminal, a user unit, a user station, a mobile station, a mobile platform, a remote station, a remote terminal, a mobile device, a user terminal, a terminal, a wireless communication device, a user agent, a user apparatus, or the like.

The terminal device may be a station (STATION, ST) device in the WLAN, which may be a cellular phone, a cordless phone, a session initiation protocol (SIP) phone, a wireless local loop (WLL) station, a personal digital assistant (PDA) device, a handheld device with wireless communication functions, a computing device or other processing devices connected to a wireless modem, an in-vehicle device, a wearable device, a terminal device in a next generation communication system (e.g., an NR network), a terminal device in a future evolved public land mobile network (PLMN) network, or the like.

In the embodiments of the present application, the terminal device may be deployed on land, which includes indoor or outdoor, handheld, wearable, or in-vehicle; the terminal device may also be deployed on water (e.g., on a steamship); and the terminal device may also be deployed in air (e.g., on an airplane, on a balloon, or on a satellite).

In the embodiments of the present application, the terminal device may be a mobile phone, a pad, a computer with a wireless transceiver function, a virtual reality (VR) terminal device, an augmented reality (AR) terminal device, a wireless terminal device in industrial control, a wireless terminal device in self driving, a wireless terminal device in remote medical, a wireless terminal device in smart grid, a wireless terminal device in transportation safety, a wireless terminal device in smart city, a wireless terminal device in smart home, an in-vehicle communication device, a wireless communication chip/application specific integrated circuit (ASIC)/a system on chip (SoC), or the like.

As an example but not a limitation, in the embodiments of the present application, the terminal device may also be a wearable device. The wearable device may also be referred to as a wearable smart device, which is a generic term for a wearable device by using wearable technology and intelligent design for everyday wear, such as glasses, gloves, a watch, clothing, or shoes. The wearable device is a portable device that is worn directly on a body, or integrated into a user's clothing or accessories. The wearable device is not only a hardware device, but also achieves powerful functions through software supporting as well as data interaction or cloud interaction. Generalized wearable smart devices includes full-featured, large-sized devices that may implement full or partial functionality without relying on smart phones, such as a smart watch or smart glasses, and devices that focus on a certain type of application functionality only and need to be used in conjunction with other devices (such as smart phones), such as various smart bracelets or smart jewelries for monitoring physical signs.

In the embodiments of the application, the network device may be a device used for communicating with a mobile device. The network device may be an access point (AP) in the WLAN, a base station (Base Transceiver Station, BTS) in the GSM or CDMA, may also be a base station (NodeB, NB) in the WCDMA, or may also be an evolutional base station (Evolutional Node B, eNB or eNodeB) in the LTE, a relay station or an access point, a network device or base station (gNB) in an in-vehicle device, a wearable device, a network device in an NR network, a network device in the future evolved PLMN network, a network device in the NTN network, or the like.

As an example but not a limitation, in the embodiments of the present application, the network device may have a mobile characteristic, for example, the network device may be a mobile device. In some embodiments, the network device may be a satellite or a balloon station. For example, the satellite may be a low earth orbit (LEO) satellite, a medium earth orbit (MEO) satellite, a geostationary earth orbit (GEO) satellite, a high elliptical orbit (HEO) satellite. In some embodiments, the network device may also be a base station provided on land, water, and other places.

In the embodiments of the present application, the network device may provide services for a cell, and the terminal device communicates with the network device through transmission resources (such as frequency domain resources, or frequency spectrum resources) used by the cell. The cell may be a cell corresponding to the network device (such as the base station). The cell may belong to a macro base station or a base station corresponding to a small cell. The small cell here may include a metro cell, a micro cell, a pico cell, a femto cell, or the like. These small cells have characteristics of small coverage range and low transmission power, which are applicable for providing a data transmission service with high speed.

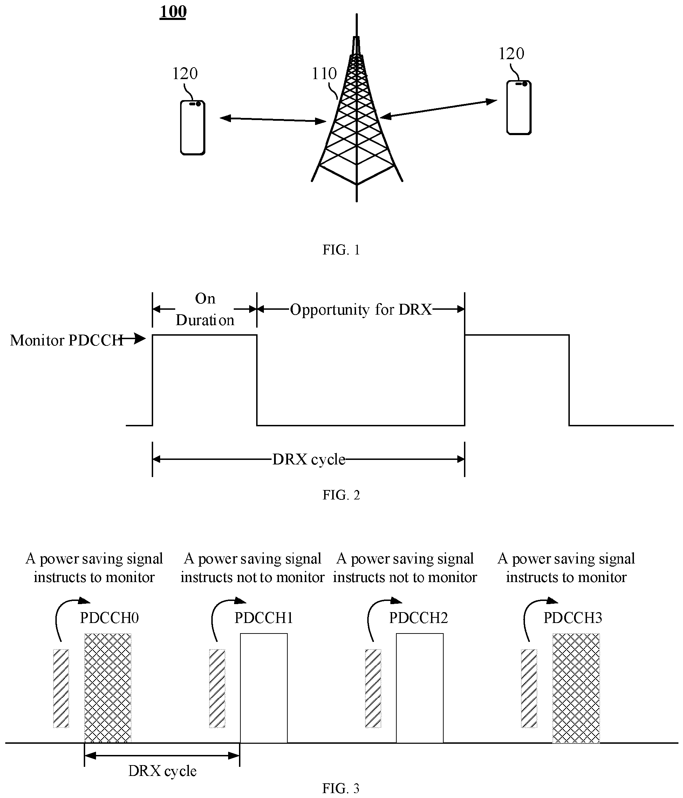

Exemplarily, a communication system 100 applied by the embodiments of the present application is illustrated in FIG. 1. The communication system 100 may include a network device 110, and the network device 110 may be a device used to communicate with a terminal device 120 (or referred to as a communication terminal or terminal). The network device 110 may provide communication coverage for a specific geographic area and communicate with terminal devices located within the coverage area.

FIG. 1 exemplarily illustrates one network device and two terminal devices. In some embodiments, the communication system 100 may include multiple network devices, and a coverage range of each network device may be provided therein with other numbers of terminal devices, which is not limited in the embodiments of the present application.

In some embodiments, the communication system 100 may further include other network entities such as a network controller, a mobile management entity, which are not limited in the embodiments of the present application.

It should be understood that a device in a network/system having a communication function in the embodiments of the present application may be referred to as a communication device. Taking the communication system 100 illustrated in FIG. 1 as an example, the communication device may include the network device 110 and the terminal device 120 with the communication function, and the network device 110 and the terminal device 120 may be the specific devices as described above, which will not be repeated here. The communication device may further include other devices in the communication system 100, such as a network controller, a mobility management entity, and other network entities, which are not limited in the embodiments of the present application.

It should be understood that, the terms "system" and "network" are often used interchangeably herein. The term "and/or" herein is only an association relationship to describe associated objects, meaning that there may be three relationships between associated objects, for example, "A and/or B" may represent: A exists alone, both A and B exist, and B exists alone. In addition, a character "/" herein generally means that related objects before and after this character are in an "or" relationship.

It should be understood that, the present application herein relates to a first communication device and a second communication device. The first communication device may be a terminal device, for example, a mobile phone, a machine facility, customer premise equipment (CPE), an industrial device, a vehicle. The second communication device may be a peer communication device of the first communication device, for example, a network device, a mobile phone, an industrial device, a vehicle. In the embodiments of the present application, the first communication device may be a terminal device, and the second communication device may be a network device (i.e., uplink communication or downlink communication); or the first communication device may be a first terminal, and the second communication device may be a second terminal (i.e., sidelink communication).

Terms used in the section of detailed description are used only for explanation of specific embodiments of the present application and are not intended to limit the present application. The terms "first", "second", "third", "fourth" or the like in the specification and claims and the drawings of the present application are used to distinguish different objects and are not used to describe a specified sequence. Furthermore, the terms "include" and "have" and any variations thereof are intended to cover non-exclusive inclusion.

It should be understood that, "indicate" mentioned in the embodiments of the present application may mean a direct indication or an indirect indication, or represent that there is an association relationship. For example, A indicates B, which may mean that A directly indicates B, for example, B may be obtained through A; or it may mean that A indirectly indicates B, for example, A indicates C, and B may be obtained through C; or it may mean that there is an association relationship between A and B.

In the description of the embodiments of the present application, the term "correspond" may mean that there is a direct correspondence or indirect correspondence between the two, or it may mean that there is an associated relationship between the two, or it may mean a relationship of indicating and being indicated, or configuring and being configured, or the like.

In the embodiments of the present application, "predefined" or "preconfigured" may be achieved by pre-storing corresponding codes, forms or other means used for indicating relevant information in devices (e.g., including a terminal device and network device), and the present application is not limited to the specific implementation thereof. For example, predefined may refer to what is defined in a protocol.

In the embodiments of the present application, the "protocol" may refer to a standard protocol in the field of communication, for example, may be evolution of an existing LTE protocol, NR protocol, Wi-Fi protocol, or protocols related to other communication systems which are related with them, and types of protocol are not limited in the present application.

To facilitate understanding of the technical solutions of the embodiments of the present application, the technical solutions of the present application are described in detail below through specific embodiments. The following related technologies, as optional solutions, may be arbitrarily combined with the technical solutions of the embodiments of the present application, and those combined solutions all belong to the protection scope of the embodiments of the present application. The embodiments of the present application include at least part of following contents.

In order to facilitate a better understanding of the embodiments of the present application, power saving of terminals based on a physical downlink control channel (PDCCH) related to the present application is described.

In an evolution of 5G, higher requirements have been put forward for the power-saving of terminals. For example, for a discontinuous reception (DRX) mechanism, during each activate period (On Duration), a terminal device needs to continuously detect a PDCCH to determine whether a base station schedules data transmission transmitted to the terminal itself. The DRX mechanism includes configuring a DRX cycle for a terminal device in a RRC_CONNECTED state. One DRX cycle consists of an "activate period (On Duration)" and a "dormancy period (Opportunity for DRX)". During the "On Duration" period, the terminal device monitors and receives downlink channels and signals, including the PDCCH; and during the "Opportunity for DRX" period, the terminal device does not receive the downlink channels and signals, such as the PDCCH, to reduce power consumption.

When there is no data transmission, the power consumption may be reduced by stopping reception of the PDCCH (at this time, PDCCH blind detection will be stopped), thereby improving battery life. A basic mechanism of DRX is to configure one DRX cycle for the terminal device in the RRC _CONNECTED state. As illustrated in FIG. 2, the DRX cycle consists of the "On Duration" and the "Opportunity for DRX". During the "On Duration" period, the terminal device monitors and receives the PDCCH (activate period); and during the "opportunity for DRX" period, the terminal device does not receive the PDCCH to reduce the power consumption (dormancy period). In addition, transmission of a paging message is also a DRX mechanism in an RRC idle state, in which the DRX cycle is a cycle of the paging message. As can be seen from FIG. 2, on a time domain, time is divided into continuous DRX cycles.

However, for most terminals, there may be no need to receive data transmission for a long time, but it is still necessary to maintain a regular wake up mechanism to monitor possible downlink transmission. For such terminals, there is room for further optimization of power saving. Furthermore, a power saving signal is introduced for power saving of terminals in the RRC_CONNECTED state to achieve further power saving. The power saving signal is used in combination with the DRX mechanism, and the terminal receives an indication of the power saving signal before the DRX ON Duration. When the terminal has data transmission during one DRX cycle, the power saving signal "wakes up" the terminal to monitor the PDCCH during the DRX On Duration. Otherwise, when the terminal has no data transmission during one DRX cycle, the power saving signal does not "wake up" the terminal, and the terminal does not need to monitor the PDCCH during the DRX On Duration. The power saving signal is carried on a PDCCH channel and carried by DCI format 2_6. A process of instructing the terminal whether to monitor the PDCCH during the DRX On Duration by the power saving signal is illustrated in FIG. 3.

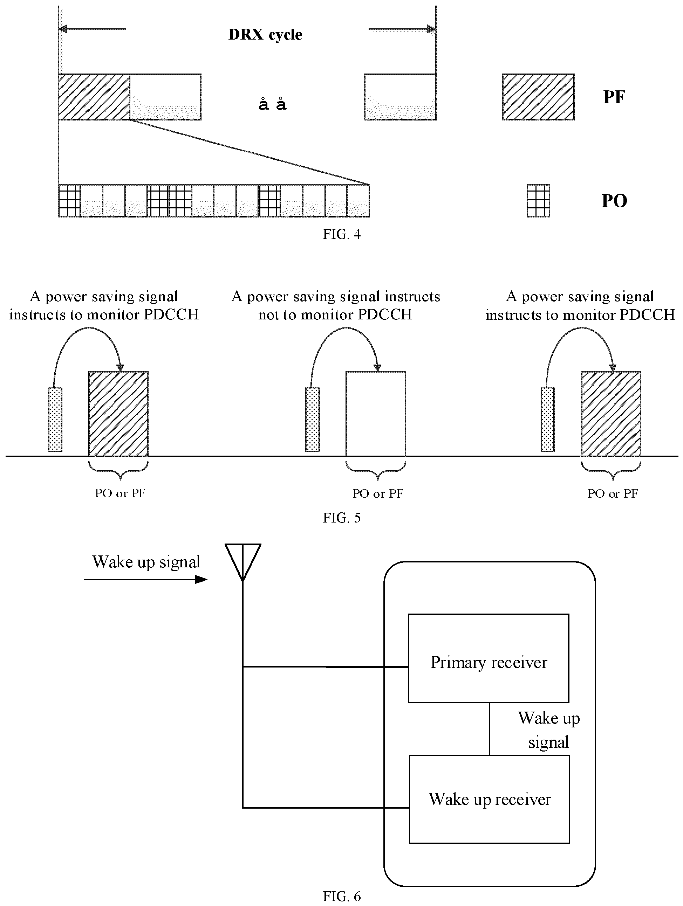

Power saving of a process of receiving a paging message by a terminal in an RRC idle state/RRC inactive state is optimized, and a similar power saving signal is introduced. A paging message is received by means of DRX, and there is a paging occasion (PO) within one DRX cycle. The terminal only receives the paging message at the PO and does not receive the paging message at times outside the PO, so as to achieve power saving. A paging frame (PF) indicates which system frame number the paging message should appear on, and a PO indicates a possible occasion when the paging message appears. A PF frame may include one or more POs. During each DRX cycle or paging cycle, the terminal only needs to monitor its own PO. The terminal calculates locations of its corresponding PF and PO in the PF according to its own identifier (ID). As illustrated in FIG. 4, the location of the PF in one paging DRX cycle and the location of the PO in the PF are illustrated.

However, in actual situations, a probability of UE being paged may not be high. The UE periodically detects the PDCCH at a corresponding PO, but fails to detect paging indication information transmitted to itself, which results in a waste of power. In some embodiments, a power saving signal may also be referred to as a paging early indication (PEI), which is used for indicating whether the UE receives a paging PDCCH at a target PO before the target PO arrives. The power saving signal is carried on the PDCCH channel and carried by DCI format 2_7. As illustrated in FIG. 5, one power saving signal indicates whether a UE in one or more paging subgroups receives paging on a corresponding PF or PO.

Power saving of UEs in the RRC _CONNECTED state is further enhanced, and an enhanced scheme for search space set group switching is further introduced, and a scheme of skipping PDCCH detection to save power when necessary is also included, that is, a PDCCH skipping scheme. Control information related to search space set group switching and PDCCH skipping is also carried on a PDCCH.

To facilitate understanding of the technical solutions of the embodiments of the present application, power saving of terminals based on a wake up receiver related to the present application is described.

To further power saving of the terminals, a wake up receiver is introduced to receive a wake up signal. The wake up receiver has characteristics with extremely low cost, extremely low complexity and extremely low power consumption, and receives the wake up signal mainly based on envelope detection. Therefore, modulation schemes, waveforms or the like of the wake up signal (WUS) received by the wake up receiver are different from these of a signal carried on the PDCCH. The wake up signal mainly is an envelope signal that is modulated by amplitude shift keying (ASK) on a carrier signal. Demodulation of the envelope signal is also accomplished by driving a low power consumption circuit based on power provided by a radio frequency signal, mainly, so the wake up receiver may be passive. The wake up receiver may also be supplied power by the terminal. Regardless of any power supply manner, the wake up receiver greatly reduces power consumption compared to a legacy receiver of the terminal. The wake up receiver may be combined with the terminal as an additional module of a terminal receiver, or may be used alone as a wake up function module of the terminal.

A system block diagram of the wake up receiver in the embodiments of the present application may be illustrated in FIG. 6. The wake up receiver receives the wake up signal. If a terminal needed to turn on a primary receiver, the terminal may be instructed to turn on the primary receiver, for example, the terminal is instructed to turn on the primary receiver through a back scattering signal. Otherwise, the primary receiver of the terminal may be in a turned-off state. It should be noted that the primary receiver in FIG. 6 may also be referred to as a primary transceiver.

In some embodiments, the wake up receiver may also receive narrow bandwidth cellular network signals (e.g., NR signals).

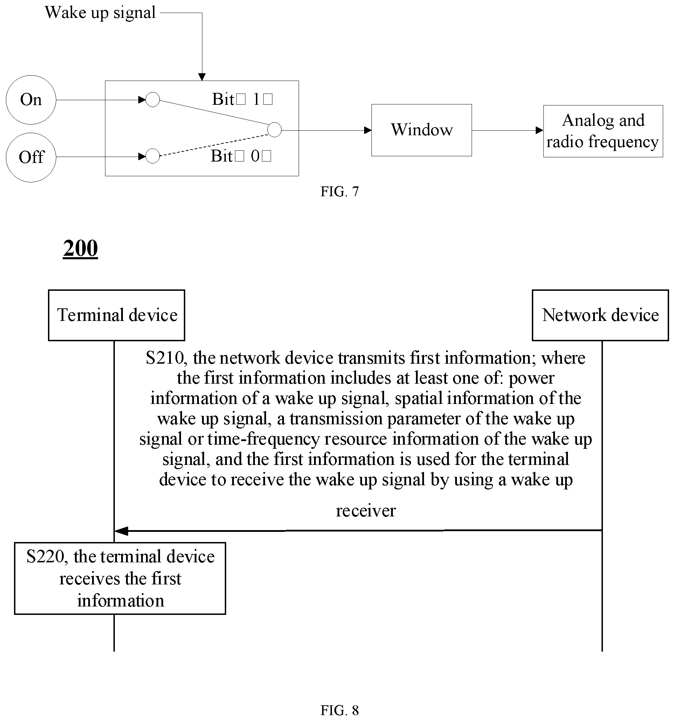

The wake up receiver (WUR) does not need to be turned on and off to save power like a legacy receiver, but may be activated by a wake up signal (WUS) at any time to receive wake up information. The wake up signal mainly is an envelope signal that is modulated by ASK on a carrier signal. For example, the wake up signal (WUS) adopts On-Off Keying (OOK) modulation. A modulation principle of OOK is to modulate amplitude of the carrier signal to non-zero and zero values, corresponding to on and off, respectively, which are used to represent information bits. OOK is also known as binary amplitude shift keying (2ASK), as illustrated in FIG. 7, bit 1 is modulated to On, and bit 0 is modulated to Off.

To facilitate understanding of the technical solutions of the embodiments of the present application, problems solved by the present application are described below.

Further power saving of UEs may be achieved by waking up a primary receiver of the UE through a wake up receiver. Before the wake up receiver of the UE receives a wake up signal, it is necessary to obtain related configuration of the wake up signal, to determine enable of the wake up receiver and reception of the wake up signal. However, in an NR system, what information is needed for the configuration of the UE wake up signal is a problem that needs to be solved.

Based on the above problem, the present application proposes a solution of power saving of terminals, which specify specific parameters included in related configuration of a wake up signal, thus, a terminal device can receive the wake up signal based on the related configuration of the wake up signal by using a wake up receiver.

The technical solutions of the present application are described in detail below through specific embodiments.

FIG. 8 is a schematic flowchart of a method of wireless communication 200 according to embodiments of the present application. As illustrated in FIG. 8, the method of wireless communication 200 may include at least part of the following contents.

S210, a network device transmits first information; where the first information includes at least one of: power information of a wake up signal, spatial information of the wake up signal, a transmission parameter of the wake up signal or time-frequency resource information of the wake up signal, and the first information is used for a terminal device to receive the wake up signal by using a wake up receiver.

S220: the terminal device receives the first information.

In the embodiments of the present application, power consumption of the wake up receiver is low, such as less than a preset value. The wake up receiver may obtain power through a terminal device to which it belongs, or the wake up receiver may be similar to a zero power consumption device and obtain power through power harvesting for communication, information collection and processing. Specifically, for example, the wake up receiver may obtain power through wireless power supply manners, such as, radio frequency signals, solar energy, pressure or temperature.

In the embodiments of the present application, the wake up receiver may also be referred to as a low power consumption receiver, a zero power consumption receiver, or similar names, which is not limited in the present application.

In some embodiments, the wake up signal may also be a power supply signal of the wake up receiver.

In some embodiments, the terminal device may include a wake up receiver and a primary transceiver (which may specifically be similar to a primary receiver in FIG. 6), and the primary transceiver may be a legacy transceiver (for transceiving a cellular network signal and channel). Different from the primary transceiver, the wake up receiver is a receiver with extremely low power consumption or even zero power consumption, and the wake up receiver adopts similar technologies of radio frequency identification (RFID), including passive, envelope detection, power harvesting, or the like. The wake up receiver may be combined with the terminal device as an additional module of the primary transceiver of the terminal device, or may be used alone as a functional module of the terminal device.

It should be noted that the wake up receiver has characteristics with extremely low cost, extremely low complexity and extremely low power consumption, and receives signals mainly based on envelope detection. Demodulation of the envelope signal is also accomplished by driving a low power consumption circuit based on power provided by a radio frequency signal, mainly, so the wake up receiver may be passive. Regardless of any power supply manner, the wake up receiver greatly reduces power consumption compared to the primary transceiver of the terminal.

In some embodiments, the wake up receiver may receive the wake up signal and wake up the primary transceiver based on the received wake up signal. For example, the wake up receiver may transmit the wake up signal to the primary transceiver to wake up the primary transceiver.

In some embodiments, the wake up receiver may perform channel listening using a first transmission manner, and the primary transceiver may perform channel listening using a second transmission manner. Specifically, under the same condition, for example, when both of them are used for channel listening, power consumption of the first transmission manner is less than power consumption of the second transmission manner. The wake up receiver may be activated and supplied power by an RF signal, for driving the wake up receiver to perform channel listening, and further transmitting indication information to the primary transceiver in a case where a result listened by the wake up receiver is that the channel is idle, where the indication information may be used for waking up or turning on the primary transceiver to further perform channel occupation and data transmission and reception.

In some embodiments, the terminal device may also receive other signals by the wake up receiver, such as, receive narrow bandwidth cellular network signals (such as NR signals) by the wake up receiver.

In some embodiments, the first information may include related configuration of one or more wake up signals, which is not limited in the embodiments of the present application.

In some embodiments, the first information may also be used for the terminal device to determine whether to receive the wake up signal by using the wake up receiver.

In some embodiments, the terminal device transmits first indication information, where the first indication information is used for indicating whether the terminal device receives the wake up signal by using the wake up receiver.

In some embodiments, the first information is carried by one of: a system message, a common radio resource control (RRC) signaling, a dedicated RRC signaling, a media access control control element (MAC CE) and a physical layer signaling.

The technical solutions of the present application are described below through specific examples.

Example I: in a case where the first information at least includes the power information of the wake up signal, the power information of the wake up signal includes, but is not limited to, at least one of:
power corresponding to a resource element modulated by high-level in amplitude modulation in a set of subcarriers carrying the wake up signal, average power of resource elements carrying the wake up signal, a power offset value between power of the wake up signal and first reference power, a ratio of power of the wake up signal to first reference power or absolute power of the wake up signal.

It should be noted that, in downlink power allocation of the NR system, allocation of energy per resource element (EPRE) is constant, however, there may be a certain power offset between EPRE of different channels or signals. The EPRE of different channels or signals is generally set by taking power of a secondary synchronization signal (SSS) in a synchronization signal block (SSB) as reference power. The power of the SSS is indicated by a parameter ss-PBCH-BlockPower configured by a high-level signaling. Transmission power of the SSS is defined as linear average power of all resource elements (REs) carrying the SSS within an operating bandwidth. EPRE of a channel state information reference signal (CSI-RS) configured by a network may be obtained by EPRE of an SSS of an SSB which has a quasi-co-located (QCL) relationship with the CSI-RS, as well as a power offset parameter powerControlOffsetSS configured by a high layer, where powerControlOffsetSS indicates an power offset between the EPRE of the CSI-RS and the EPRE of the SSS. A power offset between EPRE of a physical downlink shared channel (PDSCH) and the EPRE of the CSI-RS is indicated by a power offset parameter powerControlOffset configured by the higher layer. A ratio of EPRE of a physical downlink shared channel demodulation reference signal (PDSCH DMRS) to the EPRE of the PDSCH, and a ratio of EPRE of a physical downlink control channel (PDCCH) to the CSI-RS EPRE are also specified in the standard. EPRE information of the downlink channels or signals may be used by the UE to perform channel estimation, channel state information (CSI) reporting, link recovery, power control and other processes based on the power information.

It should be noted that the SSB may also be referred to as a synchronization signal/physical broadcast channel block (SS/PBCH block).

In Example I, for the wake up signal, the network device may set the power of the wake up signal according to a cell size and/or a coverage requirement of the wake up signal, and notify the power of the wake up signal to the terminal device. The power information of the wake up signal facilitates reception of the wake up signal by the wake up receiver. The terminal device may also determine coverage performance of the wake up signal according to the power information of the wake up signal, so as to determine reception performance of the wake up signal (such as, whether the reception of the wake up signal is reliable), and further to determine whether to receive the wake up signal by using the wake up receiver.

In some implementations of Example I, the first reference power is EPRE of a first cellular network signal having a quasi-co-located (QCL) relationship with the wake up signal.

In some implementations of Example I, the first reference power is EPRE of a first cellular network signal, or the first reference power is EPRE of a first cellular network channel.

In some implementations of Example I, the first cellular network signal includes, but is not limited to, at least one of: a synchronization signal block (SSB), a channel state information reference signal (CSI-RS), a physical downlink control channel demodulation reference signal (PDCCH DMRS), or a physical downlink shared channel demodulation reference signal (PDSCH DMRS).

In some implementations of Example I, the first cellular network channel includes, but is not limited to, at least one of: a PDCCH or a PDSCH.

In some implementations of Example I, the first reference power is agreed upon by a protocol, or the first reference power is configured by a network device.

In some implementations of Example I, the power information of the wake up signal is determined based on at least one of: a cell size, or a coverage requirement of the wake up signal.

For the wake up signal transmitted in the NR system, a more convenient manner is to implement waveform of the wake up signal by using an orthogonal frequency-division multiplexing (OFDM) modulation module. A downlink signal may generate an NR signal and a wake up signal through the same Fast Fourier Transform (FFT)/Inverse Fast Fourier Transform (IFFT) operation. Amplitude of a subcarrier in a subcarrier set carrying the wake up signal is set to generate the wake up signal, including an On waveform and Off waveform. Specifically, amplitude of some subcarriers in the subcarrier set carrying the wake up signal is set to a non-zero value, which may generate the On waveform, and amplitude of all subcarriers in the subcarrier set carrying the wake up signal is set to a zero value, which may generate the Off signal.

Specifically, power of the wake up signal may be represented as power corresponding to an RE in the On waveform or power corresponding to an RE modulated by high-level in amplitude modulation, or represented as average power of REs carrying the wake up signal. The power of the wake up signal may have a certain power offset or ratio with EPRE of a NR signal. Specifically, for example, the power of the wake up signal has a certain power offset with the power of the SSS, for example, the power offset may be -3dB, 0dB, 3dB, 6dB.

Specifically, the power of the wake up signal may have a certain power offset or ratio with EPRE of other channels or signals, for example, CSI-RS EPRE, PDSCH EPRE, PDSCH DMRS EPRE, PDCCH EPRE, or PDCCH DMRS EPRE.

Specifically, for example, a power offset configuration signaling of the wake up signal may be as shown in the following example:

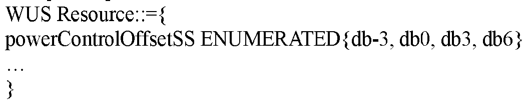

In some implementations of Example I, the absolute power of the wake up signal, such as, the power of the SSB configured by ss-PBCH-BlockPower, ranges from (-60, ..., 50) dBm.

In some implementations of Example I, the terminal device determines reception performance of the wake up signal according to the power information of the wake up signal.

In some implementations of Example I, the terminal device determines the reception performance of the wake up signal according to the power information of the wake up signal and a first measurement result.

In some implementations of Example I, the terminal device determines a path loss of the wake up signal according to the power information of the wake up signal and a first measurement result.

Optionally, the first measurement result includes at least one of: reference signal received power (RSRP), reference signal received quality (RSRQ) or a signal to interference plus noise ratio (SINR).

In Example I, the first measurement result is a measurement result obtained through measurement by a primary transceiver, or the first measurement result is a measurement result obtained through measurement by the wake up receiver.

Specifically, for example, the first measurement result is a measurement result of a cellular network signal, or the first measurement result is a measurement result obtained after the terminal device measures the wake up signal by using the primary transceiver, or the first measurement result is a measurement result obtained after the terminal device measure a cellular network signal that is transmitted in the same waveform as the wake up signal by using the primary transceiver, or the first measurement result is a measurement result obtained after the terminal device measures the wake up signal by using the wake up receiver, or the first measurement result is a measurement result obtained after the terminal device measures a cellular network signal that is transmitted in the same waveform as the wake up signal by using the wake up receiver.

In some implementations of Example I, the terminal device transmits the first measurement result. Specifically, for example, in a case where the first measurement result is less than or equal to a first threshold, the terminal device transmits the first measurement result.

Optionally, the first threshold is agreed upon by a protocol, or the first threshold is configured by a network device.

In Example I, the network device may indicate a power offset parameter of the wake up signal to the terminal device. For the terminal device, the power offset parameter may be used to determine the reception performance of the wake up signal. Specifically, for example, the reception performance of the wake up signal may be determined by combining the measurement result of the NR signal and the power offset parameter of the wake up signal, and so as further to determine whether to receive the wake up signal by using the wake up receiver. Optionally, the primary transceiver directly measures the wake up signal or a signal transmitted in the same waveform as the wake up signal to obtain the measurement result, such as, RSRP, RSRQ, or a SINR of the measurement signal. Optionally, the terminal device may feed back the measurement result to the network, so that the network or the terminal determines not to receive the wake up signal through the wake up receiver, but to receive related power saving signal through the PDCCH to achieve power saving. Otherwise, the wake up signal is received through the wake up receiver. Specifically, the terminal device may perform measurement during operation of the primary transceiver, and feed back related information to the network device. Specifically, the terminal device may perform feedback based on a measurement threshold, and when the measurement result is lower than the measurement threshold, feedback of the measurement result is triggered. Furthermore, if capability of the wake up receiver is sufficient to measure the power of the signal, the wake up receiver may directly measure the receiving power of the wake up signal or the signal transmitted in the same waveform as the wake up signal, to determine whether to receive the wake up signal by using the wake up receiver. Furthermore, since the power of the wake up signal may have a certain power offset with the CSI-RS EPRE, the network device may also estimate the reception performance of the wake up signal based on CSI reporting obtained by a result of the CSI-RS measured by the terminal device, thereby determining whether the terminal device receives the wake up signal through the wake up receiver.

Example II: in a case where the first information at least includes the spatial information of the wake up signal, the spatial information of the wake up signal includes, but is not limited to, at least one of:
a transmission configuration indicator (TCI) state associated with the wake up signal, an index of a resource of a CSI-RS having a QCL relationship with the wake up signal, an index of an SSB having a QCL relationship with the wake up signal, an index of an SSB (i.e., SSB index) corresponding to the wake up signal or a first corresponding relationship;
where the first corresponding relationship includes mapping relationships between a plurality of wake up signals and a plurality of indexes of SSBs (i.e., a plurality of SSB indexes), and the plurality of wake up signals at least includes the wake up signal.

In some implementations of Example II, in the first corresponding relationship, wake up signals in different time domains, frequency domains or code domains correspond to different indexes of SSBs.

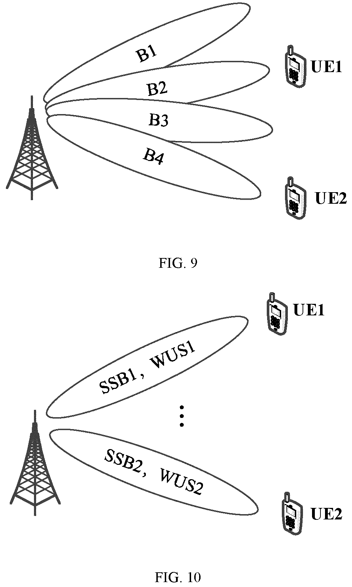

It should be noted that, since a frequency band used in the NR system is higher than that in LTE, a path loss of transmission of a wireless signal increases and coverage of the wireless signal decreases. In this case, One feasible manner to increase a gain of the wireless signal and compensate for the path loss is to use a beamforming technology to form beams through a multi-antenna system of a base station. Beams are directional. A narrow beam may only cover part of a cell and cannot cover all users in the cell. As illustrated in FIG. 9, the base station may transmit signals through beams in four different directions. For beam B2, only UE1 can be covered, but UE2 cannot be covered.

Common channels and signals in the NR system, such as, synchronization signals and broadcast channels, need to cover an entire cell through multi-beam scanning to facilitate reception of UEs within the cell. For specific channels and signals of the UE, the base station will transmit channels and signals to the UE adopting appropriate beams, through beam management. In the NR system, a QCL relationship with the CSI-RS or SSB is used to define spatial information of a channel or signal. For example, in configuration information of a control resource set (CORESET) of the PDCCH, configuration information of a reference signal, or the like, through QCL information therein, an index of a resource of a CSI-RS or an index of an SSB having a QCL relationship with the channel or signal is defined to indicate the spatial information of the channel or signal.

In Example II, in the configuration of the wake up signal, in addition to configuring the resource of the wake up signal, it is also necessary to configure the spatial information of the wake up signal. Specifically, the spatial information of the wake up signal may be configured by defining a QCL relationship between the wake up signal and a NR signal or channel, for example, the wake up signal has a QCL relationship with the CSI-RS or SSB. Specifically, the spatial information of the wake up signal may also be indicated by the TCI state. In particular, when the terminal device is in a RRC_INACTIVE or RRC_IDLE state, the base station does not maintain beams used by the terminal device. In this case, downlink common channels or signals are transmitted by beam scanning, such as, a PDCCH. It is determined that beam directions used by the PDCCH transmitted at different monitoring occasions, that is, its spatial information, by defining corresponding relationships between PDCCH monitoring occasions and indexes of SSBs. For the wake up signal, by defining the corresponding relationships between the wake up signals in different time domains, frequency domains or code domains and the NR channels or signals (such as the indexes of the SSBs), the multi-beam transmission of the wake up signal may be defined. In this way, the spatial information of the wake up signal is not indicated by explicit configuration information, but according to predefined rules, the wake up signals in different time domains, frequency domains or code domains correspond to different spatial information.

Specifically, as illustrated in FIG. 10, WUS1 and WUS2 are wake up signals configured by the network, where WUS1 has a QCL relationship with SSB1, and WUS2 has a QCL relationship with SSB2.

Example III, in a case where the first information at least includes the transmission parameter of the wake up signal, the transmission parameter of the wake up signal includes, but is not limited to, at least one of:
a modulation order of the wake up signal, an encoding scheme of the wake up signal, an encoding rate of the wake up signal, a transmission rate of the wake up signal or a symbol length of the wake up signal.

Specifically, wake up signals transmitted by the network device may have different modulation orders, encoding schemes, encoding rates, information rates and symbol lengths, and may have different transmission performances, which also affects the reception performances of the wake up signals. The network device indicates the modulation order, encoding scheme, encoding rate, information rate and symbol length of the wake up signal, which not only facilitates the reception of the wake up signal by the wake up receiver of the terminal device, but also estimates the reception performance of the wake up signal by using these parameters, so as to determine whether to receive the wake up signal by using the wake up receiver and feed back to the network.

Example IV, the first information further includes a plurality of sets of wake up signal transmission parameters, where each set of wake up signal transmission parameters in the plurality of sets of wake up signal transmission parameters includes, but is not limited to, at least one of: a modulation order, an encoding scheme, an encoding rate, a transmission rate, a symbol length, a resource size or power information. The network may select a specific combination of transmission parameters based on a plurality of sets of transmission parameters for different coverage requirements.

In some implementations of Example IV, the terminal device receives, by using the wake up receiver, the wake up signal according to the plurality of sets of wake up signal transmission parameters. Specifically, for example, when receiving the wake up signal, the terminal device may receive the wake up signal based on the plurality of sets of wake up signal transmission parameters. That is, when receiving the wake up signal each time, the terminal device may receive the wake up signal based on the plurality of sets of wake up signal transmission parameters.

In some implementations of Example IV, the terminal device receives, by using the wake up receiver, the wake up signal according to a set of wake up signal transmission parameters associated with the wake up signal in the plurality of sets of wake up signal transmission parameters.

In some implementations of Example IV, the set of wake up signal transmission parameters associated with the wake up signal is obtained by the terminal device through a primary transceiver, or the set of wake up signal transmission parameters associated with the wake up signal is obtained by the terminal device through the wake up receiver. That is, the network device may explicitly indicate the set of wake up signal transmission parameters associated with the wake up signal.

In some implementations of Example IV, the set of wake up signal transmission parameters associated with the wake up signal is determined based on a resource location of the wake up signal, or the set of wake up signal transmission parameters associated with the wake up signal is determined based on a characteristic sequence of the wake up signal. That is, the network device may implicitly indicate the set of wake up signal transmission parameters associated with the wake up signal.

Optionally, the characteristic sequence is used for the wake up receiver to synchronize or identify the wake up signal. For example, the characteristic sequence is identified by means of correlation reception.

Specifically, for example, the network may indicate the transmission parameters through the NR channel or through the wake up signal. For example, during enabling the primary receiver of the UE, configuration of the transmission parameters of the wake up signal transmitted by the network may be received, and during disabling the primary receiver of the UE, the wake up signal may be received by the wake up receiver according to the transmission parameters.

Example V, in a case where the first information at least includes the time-frequency resource information of the wake up signal, the time-frequency resource information of the wake up signal includes, but is not limited to, at least one of:
frequency domain information of the wake up signal or time domain information of the wake up signal.

In some implementations of Example V, the frequency domain information of the wake up signal includes at least one of: a frequency domain reference point associated with the wake up signal, a frequency domain offset associated with the wake up signal, a frequency domain bandwidth associated with the wake up signal, a frequency domain range associated with the wake up signal, a subcarrier spacing associated with the wake up signal or a reference subcarrier spacing associated with the wake up signal.

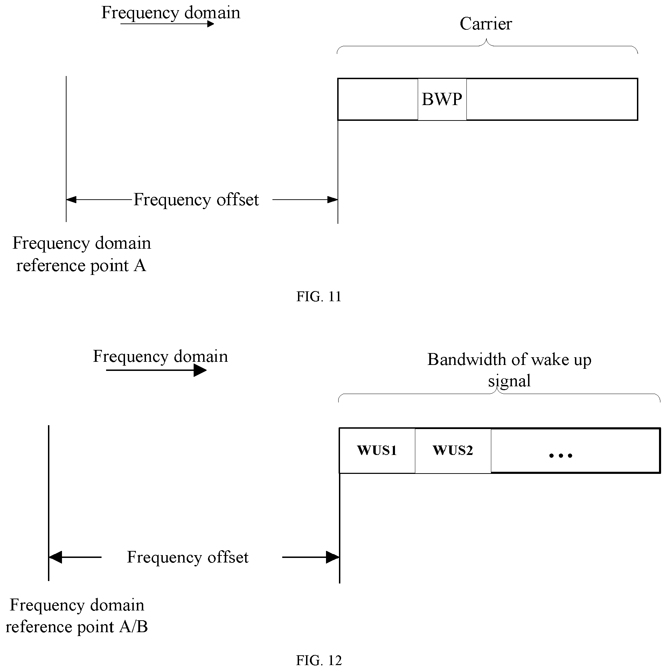

It should be noted that, in the NR system, a frequency domain position of a carrier on which the terminal device operates is configured by the network. A start point of the frequency domain position of the carrier is obtained based on a frequency domain reference point (point A) and a frequency domain offset. Combined with a size of a frequency domain bandwidth of the carrier configured by the network, the terminal device may obtain the frequency domain position of the carrier. Within the bandwidth of the carrier, the network device further configures a frequency domain position for a band width part (BWP), as illustrated in FIG. 11.

In some implementations, the wake up receiver is independent of the primary transceiver, and a frequency domain position on which the wake up receiver operates may not take into account a frequency domain position on which the primary transceiver of the terminal operates. For example, the wake up receiver may operate in different frequency bands from the primary transceiver. Especially for a problem of small coverage of the wake up signal, the wake up signal may be configured in a relatively low frequency band to improve coverage. From a perspective of operators deploying cells, NR signals and wake up signals transmitted by the network are configured as much as possible in a similar frequency range, that is, within a range of a licensed spectrum acquired by the operators. The same operator may not acquire rights of exploitation of different frequency bands at the same time.

Based on the above considerations, the configuration of the frequency domain position where the wake up signal is located may be relatively flexible, and it is unnecessarily have a necessary correlation with the frequency domain position where the primary transceiver operates. Therefore, the frequency domain position of the wake up signal may have its own independent configuration, including but not limited to: a frequency domain reference point, a frequency domain offset, a frequency domain bandwidth, a reference subcarrier spacing. The frequency domain position of the wake up signal may be a frequency domain bandwidth where the wake up signal is located, and the frequency domain bandwidth may also include frequency domain resources of multiple frequency-divided wake up signals.

In some implementations, the reference subcarrier spacing may be used to calculate an actual frequency domain size corresponding to a frequency domain offset or a frequency domain bandwidth represented in terms of the number of physical resource blocks (PRBs).

In some implementations, the frequency domain bandwidth of the wake up signal includes frequency domain resources of a plurality of wake up signals frequency-divided with the wake up signal.

In some implementations, the frequency domain reference point of the wake up signal is a start point of a frequency domain position of a carrier associated with the wake up signal, or the frequency domain reference point of the wake up signal is a start point of a frequency domain position of a BWP associated with the wake up signal.

Specifically, for example, in the configuration of the frequency domain position where the wake up signal is located, the frequency domain reference point may multiplex reference point A (Point A) of the NR system, or may be configured separately, such as reference point B (Point B), as illustrated in FIG. 12.

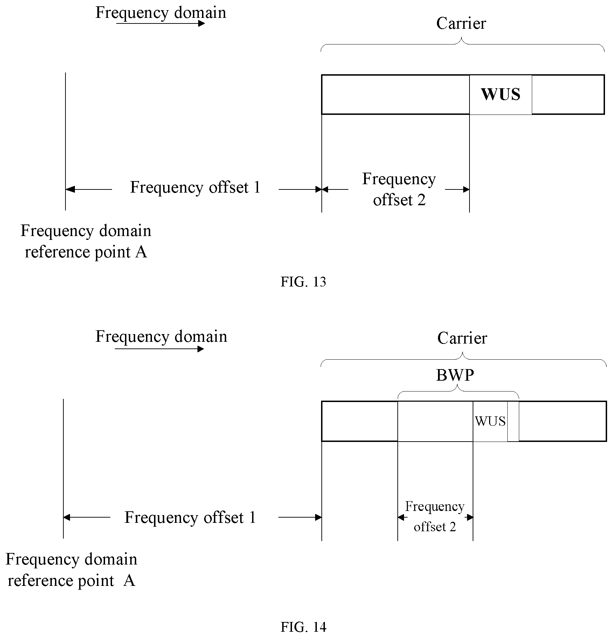

Specifically, the frequency domain reference point may also be the start point of the frequency domain position of the configured carrier. Therefore, the frequency domain position of the wake up signal may be located within the frequency domain bandwidth of the carrier or outside the frequency domain bandwidth of the carrier. Furthermore, in the configuration of the frequency domain position where the wake up signal is located, the frequency domain reference point may also be a start point of the frequency domain position of the configured BWP. The BWP may be BWP#0 or a BWP whose BWP identifier is non zero, as illustrated in FIG. 13 and FIG. 14.

In some implementations, the frequency domain bandwidth associated with the wake up signal belongs to a plurality of frequency domain bandwidths, where the plurality of frequency domain bandwidths are determined based on based on a type of the wake up receiver and/or a capability of the wake up receiver; or the frequency domain range associated with the wake up signal belongs to a plurality of frequency domain ranges, where the plurality of frequency domain ranges are determined based on a type of the wake up receiver and/or a capability of the wake up receiver.

Specifically, due to the extremely low complexity of the wake up receiver, the frequency band on which the wake up receiver operates may be relatively inflexible, or even fixed in a few frequency ranges and bandwidths, depending on the type and capability of the wake up receiver. In this case, the configure the frequency domain position of the wake up signal by the network may only need to indicate one or more of them within a limited number of frequency ranges and bandwidths. The terminal device may report the related type or capability of the wake up receiver to the network to facilitate the network to perform related configuration.

In some implementations, in a case where the wake up signal is transmitted by means of multi-carrier, the frequency domain information of the wake up signal includes a subcarrier spacing associated with the wake up signal. Specifically, for example, in response to the frequency domain position of the wake up signal is within a first BWP, a subcarrier spacing used for transmitting the wake up signal is the same as a subcarrier spacing configured for the first BWP.

In some implementations, a frequency domain position occupied by the wake up signal is located in a licensed spectrum, or a frequency domain position occupied by the wake up signal is located in an unlicensed spectrum.

In some implementations of Example V, the time domain information of the wake up signal includes, but is not limited to, at least one of:
a radio frame associated with the wake up signal, a subframe associated with the wake up signal, a slot associated with the wake up signal, a symbol associated with the wake up signal or a time domain length corresponding to the wake up signal.

Specifically, for example, the time domain length corresponding to the wake up signal may be defined by an upper limit value and a lower limit value, and the upper limit value and the lower limit value may be determined based on the capability of the terminal device.

It should be noted that although the wake up receiver may operate with extremely low power consumption and receive the wake up signal at any time, the network may still configure a time domain position of the wake up signal, for the wake up receiver of the terminal device to perform reception at the corresponding time domain position. In addition, different wake up signals may also be time-division multiplexed, and different time domain positions may correspond to different spatial information. For example, the time domain location indicates the spatial information of the wake up signal in an implicit way.

Specifically, for example, a slot associated with the wake up signal and a symbol associated with the wake up signal may be based on one reference subcarrier spacing. The subcarrier spacing used by the wake up signal may also be a subcarrier spacing configured for the BWP where the frequency domain position of the wake up signal is located, that is, the wake up signal and the NR signal use the same subcarrier spacing within the BWP.

Therefore, in the embodiments of the present application, it is specified that the related configuration of the wake up signal may include at least one of: the power information of the wake up signal, the spatial information of the wake up signal, the transmission parameter of the wake up signal or the time-frequency resource information of the wake up signal. Thus, the terminal device can receive the wake up signal based on the related configuration of the wake up signal by using the wake up receiver.

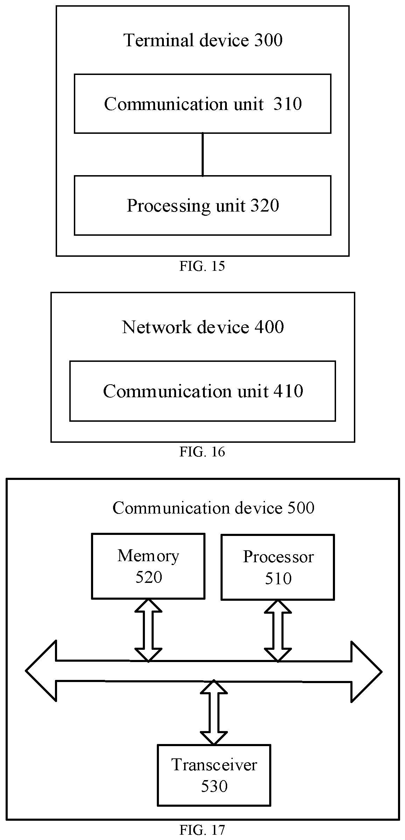

The method embodiments of the present application are described in detail with reference to FIGS. 8 to 14 above, and apparatus embodiments of the present application will be described in detail with reference to FIGS. 15 to 19 below. It should be understood that the apparatus embodiments and the method embodiments correspond to each other, and similar descriptions may be made with reference to the method embodiments.

FIG. 15 illustrates a schematic block diagram of a terminal device 300 according to the embodiments of the present application. As illustrated in FIG. 15, the terminal device 300 includes:
a communication unit 310, configured for the terminal device to receive first information;
where the first information includes at least one of: power information of a wake up signal, spatial information of the wake up signal, a transmission parameter of the wake up signal or time-frequency resource information of the wake up signal; and
the first information is used for the terminal device to receive the wake up signal by using a wake up receiver.

In some embodiments, in a case where the first information at least includes the power information of the wake up signal, the power information of the wake up signal includes at least one of:
power corresponding to a resource element modulated by high-level in amplitude modulation in a set of subcarriers carrying the wake up signal, average power of resource elements carrying the wake up signal, a power offset value between power of the wake up signal and first reference power, a ratio of power of the wake up signal to first reference power or absolute power of the wake up signal.

In some embodiments, the first reference power is energy per resource element (EPRE) of a first cellular network signal having a quasi-co-located (QCL) relationship with the wake up signal.

In some embodiments, the first reference power is EPRE of a first cellular network signal, or the first reference power is EPRE of a first cellular network channel.

In some embodiments, the first cellular network signal includes at least one of: a synchronization signal block (SSB), a channel state information reference signal (CSI-RS), a physical downlink control channel demodulation reference signal (PDCCH DMRS), or a physical downlink shared channel demodulation reference signal (PDSCH DMRS).

In some embodiments, the first cellular network channel includes at least one of: a physical downlink control channel (PDCCH) or a physical downlink shared channel (PDSCH).

In some embodiments, the first reference power is agreed upon by a protocol, or the first reference power is configured by a network device.

In some embodiments, the power information of the wake up signal is determined based on at least one of: a cell size, or a coverage requirement of the wake up signal.

In some embodiments, the terminal device 300 further includes: a processing unit 320.

The processing unit 320 is configured to determine reception performance of the wake up signal according to the power information of the wake up signal.

In some embodiments, the processing unit 320 is specifically configured to:
determine the reception performance of the wake up signal according to the power information of the wake up signal and a first measurement result; where the first measurement result includes at least one of: reference signal received power (RSRP), reference signal received quality (RSRQ) or a signal to interference plus noise ratio (SINR).

In some embodiments, the terminal device 300 further includes: the processing unit 320;
where the processing unit 320 is configured to determine a path loss of the wake up signal according to the power information of the wake up signal and a first measurement result; where the first measurement result includes at least one of: RSRP, RSRQ or a SINR.

In some embodiments, the first measurement result is a measurement result obtained through measurement by a primary transceiver, or the first measurement result is a measurement result obtained through measurement by the wake up receiver.

In some embodiments, the communication unit 310 is further configured to transmit the first measurement result.

In some embodiments, in a case where the first measurement result is less than or equal to a first threshold, the communication unit 310 is further configured to transmit the first measurement result.

In some embodiments, the first threshold is agreed upon by a protocol, or the first threshold is configured by a network device.

In some embodiments, in a case where the first information at least includes the spatial information of the wake up signal, the spatial information of the wake up signal includes at least one of:
a transmission configuration indicator (TCI) state associated with the wake up signal, an index of a resource of a CSI-RS having a QCL relationship with the wake up signal, an index of an SSB having a QCL relationship with the wake up signal, an index of an SSB corresponding to the wake up signal or a first corresponding relationship; and
where the first corresponding relationship includes mapping relationships between a plurality of wake up signals and a plurality of indexes SSBs, and the plurality of wake up signals at least includes the wake up signal.

In some embodiments, in the first corresponding relationship, wake up signals in different time domains, frequency domains or code domains correspond to different indexes of SSBs.

In some embodiments, in a case where the first information at least includes the transmission parameter of the wake up signal, the transmission parameter of the wake up signal includes at least one of:
a modulation order of the wake up signal, an encoding scheme of the wake up signal, an encoding rate of the wake up signal, a transmission rate of the wake up signal or a symbol length of the wake up signal.

In some embodiments, the first information further includes a plurality of sets of wake up signal transmission parameters, where each set of wake up signal transmission parameters in the a plurality of sets of wake up signal transmission parameters includes at least one of: a modulation order, an encoding scheme, an encoding rate, a transmission rate, a symbol length, a resource size or power information.

In some embodiments, the terminal device 300 further includes: the processing unit 320; where
the processing unit 320 is configured to receive the wake up signal according to the plurality of sets of wake up signal transmission parameters by using the wake up receiver.

In some embodiments, the terminal device 300 further includes: the processing unit 320;
where the processing unit 320 is further configured to receive the wake up signal according to a set of wake up signal transmission parameters associated with the wake up signal in the plurality of sets of wake up signal transmission parameters by using the wake up receiver.

In some embodiments, the set of wake up signal transmission parameters associated with the wake up signal is obtained by the terminal device through a primary transceiver, or the set of wake up signal transmission parameters associated with the wake up signal is obtained by the terminal device through the wake up receiver.

In some embodiments, the set of wake up signal transmission parameters associated with the wake up signal is determined based on a resource location of the wake up signal, or the set of wake up signal transmission parameters associated with the wake up signal is determined based on a characteristic sequence of the wake up signal.

In some embodiments, the characteristic sequence is used for the wake up receiver to synchronize or identify the wake up signal.

In some embodiments, in a case where the first information at least includes the time-frequency resource information of the wake up signal, the time-frequency resource information of the wake up signal includes at least one of:
frequency domain information of the wake up signal or time domain information of the wake up signal.

In some embodiments, the frequency domain information of the wake up signal includes at least one of: a frequency domain reference point associated with the wake up signal, a frequency domain offset associated with the wake up signal, a frequency domain bandwidth associated with the wake up signal, a frequency domain range associated with the wake up signal, a subcarrier spacing associated with the wake up signal or a reference subcarrier spacing associated with the wake up signal.

In some embodiments, the frequency domain bandwidth of the wake up signal includes frequency domain resources of a plurality of wake up signals frequency-divided with the wake up signal.

In some embodiments, the frequency domain reference point of the wake up signal is a start point of a frequency domain position of a carrier associated with the wake up signal, or the frequency domain reference point of the wake up signal is a start point of a frequency domain position of a bandwidth part (BWP) associated with the wake up signal.

In some embodiments, the frequency domain bandwidth associated with the wake up signal belongs to a plurality of frequency domain bandwidths, where the plurality of frequency domain bandwidths are determined based on a type of the wake up receiver and/or a capability of the wake up receiver; or
the frequency domain range associated with the wake up signal belongs to a plurality of frequency domain ranges, where the plurality of frequency domain ranges are determined based on a type of the wake up receiver and/or a capability of the wake up receiver.

In some embodiments, in a case where the wake up signal is transmitted by means of multi-carrier, the frequency domain information of the wake up signal includes a subcarrier spacing associated with the wake up signal.

In some embodiments, in response to a frequency domain position of the wake up signal is within a first BWP, a subcarrier spacing used for transmitting the wake up signal is the same as a subcarrier spacing configured for the first BWP.

In some embodiments, a frequency domain position occupied by the wake up signal is located in a licensed spectrum, or a frequency domain position occupied by the wake up signal is located in an unlicensed spectrum.

In some embodiments, the time domain information of the wake up signal includes at least one of:
a radio frame associated with the wake up signal, a subframe associated with the wake up signal, a slot associated with the wake up signal, a symbol associated with the wake up signal or a time domain length corresponding to the wake up signal.

In some embodiments, the communication unit 310 is further configured to transmit first indication information, where the first indication information is used for indicating whether the terminal device receives the wake up signal by using the wake up receiver.

In some embodiments, the first information is carried by one of:
a system message, a common radio resource control (RRC) signaling, a dedicated RRC signaling, a media access control control element (MAC CE) and a physical layer signaling.

In some embodiments, the above communication unit may be a communication interface or a transceiver, or an input/output interface of a communication chip or a system-on-chip. The above processing unit may be one or more processors.

It should be understood that the terminal device 300 according to the embodiments of the present application may correspond to the terminal device in the method embodiments of the present application, and the above and other operations and/or functions of each unit of the terminal device 300 are intend to implement the corresponding processes of the terminal device in the method 200 illustrated in FIG. 8, respectively, which will not be repeated here for the sake of brevity.

FIG. 16 illustrates a schematic block diagram of a network device 400 according to the embodiments of the present application. As illustrated in FIG. 16, the network device 400 includes:
a communication unit 410, configured to transmit first information;
where the first information includes at least one of: power information of a wake up signal, spatial information of the wake up signal, a transmission parameter of the wake up signal or time-frequency resource information of the wake up signal; and
the first information is used for a terminal device to receive the wake up signal using a wake up receiver.

In some embodiments, in a case where the first information at least includes the power information of the wake up signal, the power information of the wake up signal includes at least one of:
power corresponding to a resource element modulated by high-level in amplitude modulation in a set of subcarriers carrying the wake up signal, average power of resource elements carrying the wake up signal, a power offset value between power of the wake up signal and first reference power, a ratio of power of the wake up signal to first reference power or absolute power of the wake up signal.

In some embodiments, the first reference power is energy per resource element (EPRE) of a first cellular network signal having a quasi-co-located (QCL) relationship with the wake up signal.

In some embodiments, the first reference power is EPRE of a first cellular network signal, or the first reference power is EPRE of a first cellular network channel.

In some embodiments, the first cellular network signal includes at least one of: a synchronization signal block (SSB), a channel state information reference signal (CSI-RS), a physical downlink control channel demodulation reference signal (PDCCH DMRS), or a physical downlink shared channel demodulation reference signal (PDSCH DMRS).

In some embodiments, the first cellular network channel includes at least one of: a physical downlink control channel (PDCCH) or a physical downlink shared channel (PDSCH).

In some embodiments, the first reference power is agreed upon by a protocol, or the first reference power is configured by the network device.

In some embodiments, the power information of the wake up signal is determined based on at least one of: a cell size, or a coverage requirement of the wake up signal.

In some embodiments, the power information of the wake up signal is used for the terminal device to determine reception performance of the wake up signal.

In some embodiments, the power information of the wake up signal and a first measurement result are used for the terminal device to determine the reception performance of the wake up signal; where the first measurement result includes at least one of: reference signal received power (RSRP), reference signal received quality (RSRQ) or a signal to interference plus noise ratio (SINR).

In some embodiments, the power information of the wake up signal and a first measurement result are used for the terminal device to determine a path loss of the wake up signal; where the first measurement result includes at least one of: RSRP, RSRQ or a SINR.

In some embodiments, the first measurement result is a measurement result obtained through measurement by a primary transceiver, or the first measurement result is a measurement result obtained through measurement by the wake up receiver.

In some embodiments, the communication unit 410 is further configured to receive the first measurement result.

In some embodiments, in a case where the first measurement result is less than or equal to a first threshold, the communication unit 410 is further configured to receive the first measurement result.

In some embodiments, the first threshold is agreed upon by a protocol, or the first threshold is configured by the network device.

In some embodiments, when in a case where the first information at least includes the spatial information of the wake up signal, the spatial information of the wake up signal includes at least one of:
a transmission configuration indicator (TCI) state associated with the wake up signal, an index of a resource of a CSI-RS having a QCL relationship with the wake up signal, an index of an SSB having a QCL relationship with the wake up signal, an index of an SSB corresponding to the wake up signal or a first corresponding relationship; and
where the first corresponding relationship includes mapping relationships between a plurality of wake up signals and a plurality of indexes SSBs, and the multiple wake up signals at least includes the wake up signal.

In some embodiments, in the first corresponding relationship, wake up signals in different time domains, frequency domains or code domains correspond to different indexes of SSBs.

In some embodiments, in a case where the first information at least includes the transmission parameter of the wake up signal, the transmission parameter of the wake up signal includes at least one of:
a modulation order of the wake up signal, an encoding scheme of the wake up signal, an encoding rate of the wake up signal, a transmission rate of the wake up signal or a symbol length of the wake up signal.

In some embodiments, the first information further includes a plurality of sets of wake up signal transmission parameters, where each set of wake up signal transmission parameters in the multiple sets of wake up signal transmission parameters includes at least one of: a modulation order, an encoding scheme, an encoding rate, a transmission rate, a symbol length, a resource size or power information.

In some embodiments, the plurality of sets of wake up signal transmission parameters are used for the terminal device to receive the wake up signal by using the wake up receiver.

In some embodiments, a set of wake up signal transmission parameters associated with the wake up signal in the plurality of sets of wake up signal transmission parameters is used for the terminal device to receive the wake up signal by using the wake up receiver.

In some embodiments, the set of wake up signal transmission parameters associated with the wake up signal is obtained by the terminal device through a primary transceiver, or the set of wake up signal transmission parameters associated with the wake up signal is obtained by the terminal device through the wake up receiver.

In some embodiments, the set of wake up signal transmission parameters associated with the wake up signal is determined based on a resource location of the wake up signal, or the set of wake up signal transmission parameters associated with the wake up signal is determined based on a characteristic sequence of the wake up signal.

In some embodiments, the characteristic sequence is used for the wake up receiver to synchronize or identify the wake up signal.

In some embodiments, in a case where the first information at least includes the time-frequency resource information of the wake up signal, the time-frequency resource information of the wake up signal includes at least one of:
frequency domain information of the wake up signal or time domain information of the wake up signal.

In some embodiments, the frequency domain information of the wake up signal includes at least one of: a frequency domain reference point associated with the wake up signal, a frequency domain offset associated with the wake up signal, a frequency domain bandwidth associated with the wake up signal, a frequency domain range associated with the wake up signal, a subcarrier spacing associated with the wake up signal or a reference subcarrier spacing associated with the wake up signal.

In some embodiments, the frequency domain bandwidth of the wake up signal includes frequency domain resources of a plurality of wake up signals frequency-divided with the wake up signal.

In some embodiments, the frequency domain reference point of the wake up signal is a start point of a frequency domain position of a carrier associated with the wake up signal, or the frequency domain reference point of the wake up signal is a start point of a frequency domain position of a bandwidth part (BWP) associated with the wake up signal.

In some embodiments, the frequency domain bandwidth associated with the wake up signal belongs to a plurality of frequency domain bandwidths, where the plurality of frequency domain bandwidths are determined based on a type of the wake up receiver and/or a capability of the wake up receiver; or
the frequency domain range associated with the wake up signal belongs to a plurality of frequency domain ranges, where the plurality of frequency domain ranges are determined based on a type of the wake up receiver and/or a capability of the wake up receiver.

In some embodiments, in a case where the wake up signal is transmitted by means of multi-carrier, the frequency domain information of the wake up signal includes a subcarrier spacing associated with the wake up signal.

In some embodiments, in response to a frequency domain position of the wake up signal is within a first BWP, a subcarrier spacing used for transmitting the wake up signal is the same as a subcarrier spacing configured for the first BWP.

In some embodiments, a frequency domain position occupied by the wake up signal is located in a licensed spectrum, or a frequency domain position occupied by the wake up signal is located in an unlicensed spectrum.

In some embodiments, the time domain information of the wake up signal includes at least one of:
a radio frame associated with the wake up signal, a subframe associated with the wake up signal, a slot associated with the wake up signal, a symbol associated with the wake up signal or a time domain length corresponding to the wake up signal.

In some embodiments, the communication unit 410 is further configured to transmit first indication information, where the first indication information is used for indicating whether the terminal device receives the wake up signal by using the wake up receiver.

In some embodiments, the first information is carried by one of:
a system message, a common radio resource control (RRC) signaling, a dedicated RRC signaling, a media access control control element (MAC CE) and a physical layer signaling.

In some embodiments, the above communication unit may be a communication interface or a transceiver, or an input-output interface of a communication chip or a system-on-chip. The above processing unit may be one or more processors.

It should be understood that the network device 400 according to the embodiments of the present application may correspond to the network device in the method embodiments of the present application, and the above and other operations and/or functions of each unit of the network device 400 are intend to implement the corresponding processes of the network device in the method 200 illustrated in FIG. 8, respectively, which will not be repeated here for the sake of brevity.

FIG. 17 is a schematic structural diagram of a communication device 500 provided by the embodiments of the present application. The communication device 500 illustrated in FIG. 17 includes a processor 510, and the processor 510 may call a computer program from a memory and run the computer program to implement the methods in the embodiments of the present application.

In some embodiments, as illustrated in FIG. 17, the communication device 500 may also include a memory 520. Herein, the processor 510 may call a computer program from the memory 520 and run the computer program to implement the methods in the embodiments of the present application.

The memory 520 may be a separate device independent from the processor 510, or may be integrated into the processor 510.

In some embodiments, as illustrated in FIG. 17, the communication device 500 may also include a transceiver 530, and the processor 510 may control the transceiver 530 to communicate with other devices, and specifically, to transmit information or data to other devices, or receive information or data transmitted by the other devices.

The transceiver 530 may include a transmitter and a receiver. The transceiver 530 may further include antenna(s). There may be one or more antennas.

In some embodiments, the communication device 500 may be the network device of the embodiments of the present application, and the communication device 500 may implement the corresponding processes implemented by the network device in various methods of the embodiments of the present application, which will not be repeated here for the sake of brevity.

In some embodiments, the communication device 500 may be the terminal device of the embodiments of the present application, and the communication device 500 may implement the corresponding processes implemented by the terminal device in various methods of the embodiments of the present application, which will not be repeated here for the sake of brevity.

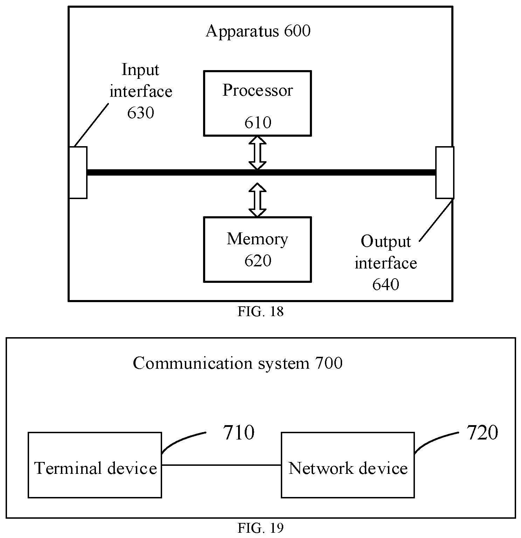

FIG. 18 is a schematic structural diagram of an apparatus according to the embodiments of the present application. An apparatus 600 illustrated in FIG. 18 includes a processor 610, and the processor 610 may call a computer program from a memory and run the computer program to implement the methods in the embodiments of the present application.

In some embodiments, as illustrated in FIG. 18, the apparatus 600 may also include a memory 620. Herein, the processor 610 may call a computer program from the memory 620 and run the computer program to implement the methods in the embodiment of the present application.

The memory 620 may be a separate device independent from the processor 610 or may be integrated into the processor 610.

In some embodiments, the apparatus 600 may further include an input interface 630. The processor 610 may control the input interface 630 to communicate with other devices or chips, and specifically, to obtain information or data transmitted by other devices or chips.

In some embodiments, the apparatus 600 may further include an output interface 640. The processor 610 may control the output interface 640 to communicate with other devices or chip, and specifically, to output information or data to other devices or chips.

In some embodiments, the apparatus may be applied to the network device in the embodiments of the present application, and the apparatus may implement the corresponding processes implemented by the network device in various methods of the embodiments of the present application, which will not be repeated here for the sake of brevity.

In some embodiments, the apparatus may be applied to the terminal device in the embodiments of the present application, and the apparatus may implement the corresponding processes implemented by the terminal device in various methods of the embodiments of the present application, which will not be repeated here for the sake of brevity.

In some embodiments, the apparatus mentioned in the embodiments of the present application may also be a chip. For example, the chip may be a system-level chip, a system chip, a chip system or a system-on-chip, or the like.

FIG. 19 is a schematic block diagram of a communication system 700 provided by the embodiments of the present application. As illustrated in FIG. 19, the communication system 700 includes a terminal device 710 and a network device 720.

The terminal device 710 may be configured to implement the corresponding functions implemented by the terminal device in the above methods, or the network device 720 may be configured to implement the corresponding functions implemented by the network device in the above methods, which will not be repeated here for the sake of brevity.

It should be understood that the processor of the embodiments of the present application may be an integrated circuit chip with signal processing capability. In the implementation process, each step of the above method embodiments may be completed by the instructions in the form of integrated logic circuit of hardware or software in the processor. The above processors may be a general purpose processor, a digital signal processor (DSP), an application specific integrated circuit (ASIC), a field programmable gate array (FPGA), other programmable logic device, a discrete gate, a transistor logic device, or a discrete hardware component, which may implement or execute the disclosed methods, steps and logic block diagrams in the embodiments of the present disclosure. The general purpose processor may be a microprocessor, or the processor may be any conventional processor, or the like. The steps of the methods disclosed in connection with the embodiments of the present disclosure may be directly embodied in the execution completion of the hardware decoding processor, or by the combination of the hardware and software modules in the decoding processor. The software module may be located in a random memory, a flash memory, a read-only memory, a programmable read-only memory, an electrically erasable programmable memory, a register or other mature storage media in the art. The storage medium is located in the memory, and the processor reads the information in the memory and completes the steps of the above method in combination with its hardware.

It will be understood that the memory in the embodiments of the present application may be a volatile memory or a non-volatile memory, or may include both the volatile memory and non-volatile memory. The non-volatile memory may be a read-only memory (ROM), a programmable read-only memory (Programmable ROM, PROM), an erasable programmable read-only memory (Erasable PROM, EPROM), an electrically erasable programmable read-only memory (Electrically EPROM, EEPROM) or a flash memory. The volatile memory may be a random access memory (RAM), which is used as an external cache. As an example but not a limitation for illustration, many forms of the RAM are available, such as, a static random access memory (Static RAM, SRAM), a dynamic random access memory (Dynamic RAM, DRAM), a synchronous dynamic random access memory (Synchronous DRAM, SDRAM), a double data rate synchronous dynamic random access memory (Double Data Rate SDRAM, DDR SDRAM), an enhanced synchronous dynamic random access memory (Enhanced SDRAM, ESDRAM), a synchronous link dynamic random access memory (Synchlink DRAM, SLDRAM) and a direct Rambus random access memory (Direct Rambus RAM, DR RAM). It should be noted that the memory of the systems and methods described herein is intended to include, but is not limited to, these and any other suitable types of memories.

It should be understood that the above memory is exemplary but not limited illustration. For example, the memory in the embodiments of the present application may also be a static random access memory (static RAM, SRAM), a dynamic random access memory (dynamic RAM, DRAM), a synchronous dynamic random access memory (synchronous DRAM, SDRAM)), a double data rate synchronous dynamic random access memory (double data rate SDRAM, DDR SDRAM), an enhanced synchronous dynamic random access memory (enhanced SDRAM, ESDRAM), a synchronous link dynamic random access memory (synch link DRAM, SLDRAM), a direct Rambus random access memory (Direct Rambus RAM, DR RAM), etc. That is, the memory in the embodiments of the present application is intended to include, but is not limited to, these and any other suitable types of memories.

The embodiments of the present application further provide a computer readable storage medium for storing a computer program.

In some embodiments, the computer readable storage medium may be applied to the network device in the embodiments of the present application, and the computer program causes a computer to perform the corresponding processes implemented by the network device in various methods of the embodiments of the present application, which will not be repeated here for the sake of brevity.

In some embodiments, the computer readable storage medium may be applied to the terminal device in the embodiments of the present application, and the computer program causes a computer to perform the corresponding processes implemented by the terminal device in various methods of the embodiments of the present application, which will not be repeated here for the sake of brevity.

The embodiments of the present application further provide a computer program product, including computer program instructions.

In some embodiments, the computer program product may be applied to the network device in the embodiments of the present application, and the computer program instructions causes a computer to perform the corresponding processes implemented by the network device in various methods of the embodiments of the present application, which will not be repeated here for the sake of brevity.

In some embodiments, the computer program product may be applied to the terminal device in the embodiments of the present application, and the computer program instructions causes a computer to perform the corresponding processes implemented by the terminal device in various methods of the embodiments of the present application, which will not be repeated here for the sake of brevity.

The embodiments of the present application further provide a computer program.

In some embodiments, the computer program may be applied to the network device in the embodiment of the present application, and the computer program, when running on a computer, causes the computer to perform the corresponding processes implemented by the network device in various methods of the embodiments of the present application, which will not be repeated here for the sake of brevity.

In some embodiments, the computer program may be applied to the terminal device in the embodiment of the present application, and the computer program, when running on a computer, causes the computer to perform the corresponding processes implemented by the terminal device in various methods of the embodiments of the present application, which will not be repeated here for the sake of brevity.

Those of ordinary skill in the art will appreciate that the units and algorithm operations of each example described in connection with the embodiments disclosed herein may be implemented by electronic hardware, or by the combination of computer software and electronic hardware. Whether these functions are performed in hardware or software depends on the specific application and design constraints of the technical solutions. A professional technician may use different methods to implement the described functions for each specific application, but such implementation is not considered to be beyond the scope of the present application.

Those skilled in the art may clearly understand that for the convenience and brevity of the description, the specific working processes of the system, apparatus and unit described above may refer to the corresponding procedures in the embodiments of the method above, and will not be repeated herein.

In several embodiments provided by the present application, it should be understood that the disclosed system, apparatus and method may be implemented in other ways. For example, the embodiments of the apparatus described above are only schematic, for example, the division of the unit is only a logical functional division, and there may be another division way in the actual implementation, for example, multiple units or components may be combined or integrated into another system, or some features may be ignored or not implemented. On the other aspect, the mutual coupling or direct coupling or communication connection illustrated or discussed may be indirect coupling or communication connection through some interfaces, apparatus or units, and may be electrical, mechanical or other forms.

The units described as separation parts may or may not be physically separated, and the component displayed as a unit may be or may not be a physical unit, that is, it may be located at one place, or it may be distributed to multiple network units. Some or all of the units may be selected according to actual requirements to achieve the purpose of the schemes of the embodiments.

In addition, various functional units in each embodiment of the present application may be integrated into one processing unit, various units may exist physically alone, or two or more units may be integrated into one unit.

If the function is implemented in the form of a software functional unit and is sold or used as an independent product, it can be stored in a computer readable storage medium. Based on such an understanding, the technical solutions of the present application, in essence or the part that contributes to the prior art or the part of the technical solutions, may be embodied in the form of a software product, the computer software product is stored in a storage medium, includes multiple instructions for making a computer device (which may be a personal computer, a server, a network device, etc.) to perform all or part of the steps of the method according to each embodiment of the present application. The aforementioned storage media includes a media that may store a program code, such as a U disk, a mobile hard disk, a read-only memory (ROM), a random access memory (RAM), a disk or an optical disk.

The foregoing descriptions are merely specific implementations of the present application, but the protection scope of the present application is not limited thereto. Any skilled person in the art could readily conceive of changes or replacements within the technical scope of the present application, which shall be all included in the protection scope of the present application. Therefore, the protection scope of the present application shall be subject to the protection scope of claims.

## Claims

1. A method of wireless communication, comprising:
receiving, by a terminal device, first information;
wherein the first information comprises at least one of: power information of a wake up signal, spatial information of the wake up signal, a transmission parameter of the wake up signal or time-frequency resource information of the wake up signal; and
the first information is used for the terminal device to receive the wake up signal by using a wake up receiver.

2. The method of claim 1, wherein
in a case where the first information at least comprises the power information of the wake up signal, the power information of the wake up signal comprises at least one of:
power corresponding to a resource element modulated by high-level in amplitude modulation in a set of subcarriers carrying the wake up signal, average power of resource elements carrying the wake up signal, a power offset value between power of the wake up signal and first reference power, a ratio of power of the wake up signal to first reference power or absolute power of the wake up signal.

3. The method of claim 2, wherein the first reference power is energy per resource element (EPRE) of a first cellular network signal having a quasi-co-located (QCL) relationship with the wake up signal.

4. The method of claim 2, wherein the first reference power is EPRE of a first cellular network signal, or the first reference power is EPRE of a first cellular network channel.

5. The method of claim 3 or 4, wherein
the first cellular network signal comprises at least one of: a synchronization signal block (SSB), a channel state information reference signal (CSI-RS), a physical downlink control channel demodulation reference signal (PDCCH DMRS), or a physical downlink shared channel demodulation reference signal (PDSCH DMRS).

6. The method of claim 4, wherein the first cellular network channel comprises at least one of: a physical downlink control channel (PDCCH) or a physical downlink shared channel (PDSCH).

7. The method of claim 2, wherein
the first reference power is agreed upon by a protocol, or the first reference power is configured by a network device.

8. The method of any one of claims 2 to 7, wherein the power information of the wake up signal is determined based on at least one of: a cell size, or a coverage requirement of the wake up signal.

9. The method of any one of claims 2 to 8, further comprising:
determining, by the terminal device, reception performance of the wake up signal according to the power information of the wake up signal.

10. The method of claim 9, wherein determining, by the terminal device, the reception performance of the wake up signal according to the power information of the wake up signal comprises:
determining, by the terminal device, the reception performance of the wake up signal according to the power information of the wake up signal and a first measurement result; wherein the first measurement result comprises at least one of: reference signal received power (RSRP), reference signal received quality (RSRQ) or a signal to interference plus noise ratio (SINR).

11. The method of any one of claims 2 to 10, further comprising:
determining, by the terminal device, a path loss of the wake up signal according to the power information of the wake up signal and a first measurement result; wherein the first measurement result comprises at least one of: RSRP, RSRQ or a SINR.

12. The method of claim 10 or 11, wherein
the first measurement result is a measurement result obtained through measurement by a primary transceiver, or the first measurement result is a measurement result obtained through measurement by the wake up receiver.

13. The method of any one of claims 10 to 12, further comprising:
transmitting, by the terminal device, the first measurement result.

14. The method of claim 13, wherein transmitting, by the terminal device, the first measurement result comprises:
in a case where the first measurement result is less than or equal to a first threshold, transmitting, by the terminal device, the first measurement result.

15. The method of claim 14, wherein
the first threshold is agreed upon by a protocol, or the first threshold is configured by a network device.

16. The method of claim 1, wherein in a case where the first information at least comprises the spatial information of the wake up signal, the spatial information of the wake up signal comprises at least one of:
a transmission configuration indicator (TCI) state associated with the wake up signal, an index of a resource of a CSI-RS having a QCL relationship with the wake up signal, an index of an SSB having a QCL relationship with the wake up signal, an index of an SSB corresponding to the wake up signal or a first corresponding relationship; wherein
the first corresponding relationship comprises mapping relationships between a plurality of wake up signals and a plurality of indexes of SSBs, and the plurality of wake up signals at least comprises the wake up signal.

17. The method of claim 16, wherein in the first corresponding relationship, wake up signals in different time domains, frequency domains or code domains correspond to different indexes of SSBs.

18. The method of claim 1, wherein in a case where the first information at least comprises the transmission parameter of the wake up signal, the transmission parameter of the wake up signal comprises at least one of:
a modulation order of the wake up signal, an encoding scheme of the wake up signal, an encoding rate of the wake up signal, a transmission rate of the wake up signal or a symbol length of the wake up signal.

19. The method of claim 1, wherein the first information further comprises a plurality of sets of wake up signal transmission parameters, wherein each set of wake up signal transmission parameters in the plurality of sets of wake up signal transmission parameters comprises at least one of: a modulation order, an encoding scheme, an encoding rate, a transmission rate, a symbol length, a resource size or power information.

20. The method of claim 19, further comprising:
receiving, by the terminal device by using the wake up receiver, the wake up signal according to the plurality of sets of wake up signal transmission parameters.

21. The method of claim 19, further comprising:
receiving, by the terminal device by using the wake up receiver, the wake up signal according to a set of wake up signal transmission parameters associated with the wake up signal in the plurality of sets of wake up signal transmission parameters.

22. The method of claim 21, wherein
the set of wake up signal transmission parameters associated with the wake up signal is obtained by the terminal device through a primary transceiver, or the set of wake up signal transmission parameters associated with the wake up signal is obtained by the terminal device through the wake up receiver.

23. The method of claim 21, wherein
the set of wake up signal transmission parameters associated with the wake up signal is determined based on a resource location of the wake up signal, or the set of wake up signal transmission parameters associated with the wake up signal is determined based on a characteristic sequence of the wake up signal.

24. The method of claim 23, wherein the characteristic sequence is used for the wake up receiver to synchronize or identify the wake up signal.

25. The method of claim 1, wherein in a case where the first information at least comprises the time-frequency resource information of the wake up signal, the time-frequency resource information of the wake up signal comprises at least one of:
frequency domain information of the wake up signal or time domain information of the wake up signal.

26. The method of claim 25, wherein
the frequency domain information of the wake up signal comprises at least one of: a frequency domain reference point associated with the wake up signal, a frequency domain offset associated with the wake up signal, a frequency domain bandwidth associated with the wake up signal, a frequency domain range associated with the wake up signal, a subcarrier spacing associated with the wake up signal or a reference subcarrier spacing associated with the wake up signal.

27. The method of claim 26, wherein
the frequency domain bandwidth of the wake up signal comprises frequency domain resources of a plurality of wake up signals frequency-divided with the wake up signal.

28. The method according to claim 26 or 27, wherein
the frequency domain reference point of the wake up signal is a start point of a frequency domain position of a carrier associated with the wake up signal, or the frequency domain reference point of the wake up signal is a start point of a frequency domain position of a bandwidth part (BWP) associated with the wake up signal.

29. The method of any one of claims 26 to 28, wherein
the frequency domain bandwidth associated with the wake up signal belongs to a plurality of frequency domain bandwidths, wherein the plurality of frequency domain bandwidths are determined based on a type of the wake up receiver and/or a capability of the wake up receiver; or
the frequency domain range associated with the wake up signal belongs to a plurality of frequency domain ranges, wherein the plurality of frequency domain ranges are determined based on a type of the wake up receiver and/or a capability of the wake up receiver.

30. The method of any one of claims 26 to 29, wherein in a case where the wake up signal is transmitted by means of multi-carrier, the frequency domain information of the wake up signal comprises a subcarrier spacing associated with the wake up signal.

31. The method of claim 30, wherein
in response to a frequency domain position of the wake up signal is within a first BWP, a subcarrier spacing used for transmitting the wake up signal is the same as a subcarrier spacing configured for the first BWP.

32. The method of any one of claims 26 to 31, wherein a frequency domain position occupied by the wake up signal is located in a licensed spectrum, or a frequency domain position occupied by the wake up signal is located in an unlicensed spectrum.

33. The method of claim 25, wherein
the time domain information of the wake up signal comprises at least one of:
a radio frame associated with the wake up signal, a subframe associated with the wake up signal, a slot associated with the wake up signal, a symbol associated with the wake up signal or a time domain length corresponding to the wake up signal.

34. The method of any one of claims 1 to 33, further comprising:
transmitting, by the terminal device, first indication information, wherein the first indication information is used for indicating whether the terminal device receives the wake up signal by using the wake up receiver.

35. The method of any one of claims 1 to 34, wherein the first information is carried by one of:
a system message, a common radio resource control (RRC) signaling, a dedicated RRC signaling, a media access control control element (MAC CE) and a physical layer signaling.

36. A method of wireless communication, comprising:
transmitting, by a network device, first information;
wherein the first information comprises at least one of: power information of a wake up signal, spatial information of the wake up signal, a transmission parameter of the wake up signal or time-frequency resource information of the wake up signal; and
the first information is used for a terminal device to receive the wake up signal using a wake up receiver.

37. The method of claim 36, wherein
in a case where the first information at least comprises the power information of the wake up signal, the power information of the wake up signal comprises at least one of:
power corresponding to a resource element modulated by high-level in amplitude modulation in a set of subcarriers carrying the wake up signal, average power of resource elements carrying the wake up signal, a power offset value between power of the wake up signal and first reference power, a ratio of power of the wake up signal to first reference power or absolute power of the wake up signal.

38. The method of claim 37, wherein the first reference power is energy per resource element (EPRE) of a first cellular network signal having a quasi-co-located (QCL) relationship with the wake up signal.

39. The method of claim 37, wherein the first reference power is EPRE of a first cellular network signal, or the first reference power is EPRE of a first cellular network channel.

40. The method of claim 38 or 39, wherein
the first cellular network signal comprises at least one of: a synchronization signal block (SSB), a channel state information reference signal (CSI-RS), a physical downlink control channel demodulation reference signal (PDCCH DMRS), or a physical downlink shared channel demodulation reference signal (PDSCH DMRS).

41. The method of claim 39, wherein the first cellular network channel comprises at least one of: a physical downlink control channel (PDCCH) or a physical downlink shared channel (PDSCH).

42. The method of claim 37, wherein
the first reference power is agreed upon by a protocol, or the first reference power is configured by the network device.

43. The method of any one of claims 37 to 42, wherein the power information of the wake up signal is determined based on at least one of: a cell size, or a coverage requirement of the wake up signal.

44. The method of any one of claims 37 to 43, wherein
the power information of the wake up signal is used for the terminal device to determine reception performance of the wake up signal.

45. The method of claim 44, wherein
the power information of the wake up signal and a first measurement result are used for the terminal device to determine the reception performance of the wake up signal; wherein the first measurement result comprises at least one of: reference signal received power (RSRP), reference signal received quality (RSRQ) or a signal to interference plus noise ratio (SINR).

46. The method of any one of claims 37 to 45, wherein
the power information of the wake up signal and a first measurement result are used for the terminal device to determine a path loss of the wake up signal; wherein the first measurement result comprises at least one of: RSRP, RSRQ or a SINR.

47. The method of claim 45 or 46, wherein
the first measurement result is a measurement result obtained through measurement by a primary transceiver, or the first measurement result is a measurement result obtained through measurement by the wake up receiver.

48. The method of any one of claims 45 to 47, further comprising:
receiving, by the network device, the first measurement result.

49. The method of claim 48, wherein receiving, by the network device, the first measurement result comprises:
in a case where the first measurement result is less than or equal to a first threshold, receiving, by the network device, the first measurement result.

50. The method of claim 49, wherein
the first threshold is agreed upon by a protocol, or the first threshold is configured by the network device.

51. The method of claim 36, wherein in a case where the first information at least comprises the spatial information of the wake up signal, the spatial information of the wake up signal comprises at least one of:
a transmission configuration indicator (TCI) state associated with the wake up signal, an index of a resource of a CSI-RS having a QCL relationship with the wake up signal, an index of an SSB having a QCL relationship with the wake up signal, an index of an SSB corresponding to the wake up signal or a first corresponding relationship; wherein
the first corresponding relationship comprises mapping relationships between a plurality of wake up signals and a plurality of indexes of SSBs, and the plurality of wake up signals at least comprises the wake up signal.

52. The method of claim 51, wherein in the first corresponding relationship, wake up signals in different time domains, frequency domains or code domains correspond to different indexes of SSBs.

53. The method of claim 36, wherein in a case where the first information at least comprises the transmission parameter of the wake up signal, the transmission parameter of the wake up signal comprises at least one of:
a modulation order of the wake up signal, an encoding scheme of the wake up signal, an encoding rate of the wake up signal, a transmission rate of the wake up signal or a symbol length of the wake up signal.

54. The method of claim 36, wherein the first information further comprises a plurality of sets of wake up signal transmission parameters, wherein each set of wake up signal transmission parameters in the plurality of sets of wake up signal transmission parameters comprises at least one of: a modulation order, an encoding scheme, an encoding rate, a transmission rate, a symbol length, a resource size or power information.

55. The method of claim 54, wherein
the plurality of sets of wake up signal transmission parameters are used for the terminal device to receive the wake up signal by using the wake up receiver.

56. The method of claim 54, wherein
a set of wake up signal transmission parameters associated with the wake up signal in the plurality of sets of wake up signal transmission parameters is used for the terminal device to receive the wake up signal by using the wake up receiver.

57. The method of claim 56, wherein
the set of wake up signal transmission parameters associated with the wake up signal is obtained by the terminal device through a primary transceiver, or the set of wake up signal transmission parameters associated with the wake up signal is obtained by the terminal device through the wake up receiver.

58. The method of claim 56, wherein
the set of wake up signal transmission parameters associated with the wake up signal is determined based on a resource location of the wake up signal, or the set of wake up signal transmission parameters associated with the wake up signal is determined based on a characteristic sequence of the wake up signal.

59. The method of claim 58, wherein the characteristic sequence is used for the wake up receiver to synchronize or identify the wake up signal.

60. The method of claim 36, wherein in a case where the first information at least comprises the time-frequency resource information of the wake up signal, the time-frequency resource information of the wake up signal comprises at least one of:
frequency domain information of the wake up signal or time domain information of the wake up signal.

61. The method of claim 60, wherein
the frequency domain information of the wake up signal comprises at least one of: a frequency domain reference point associated with the wake up signal, a frequency domain offset associated with the wake up signal, a frequency domain bandwidth associated with the wake up signal, a frequency domain range associated with the wake up signal, a subcarrier spacing associated with the wake up signal or a reference subcarrier spacing associated with the wake up signal.

62. The method of claim 61, wherein
the frequency domain bandwidth of the wake up signal comprises frequency domain resources of a plurality of wake up signals frequency-divided with the wake up signal.

63. The method of claim 61 or 62, wherein
the frequency domain reference point of the wake up signal is a start point of a frequency domain position of a carrier associated with the wake up signal, or the frequency domain reference point of the wake up signal is a start point of a frequency domain position of a bandwidth part (BWP) associated with the wake up signal.

64. The method of any one of claims 61 to 63, wherein
the frequency domain bandwidth associated with the wake up signal belongs to a plurality of frequency domain bandwidths, wherein the plurality of frequency domain bandwidths are determined based on a type of the wake up receiver and/or a capability of the wake up receiver; or
the frequency domain range associated with the wake up signal belongs to a plurality of frequency domain ranges, wherein the plurality of frequency domain ranges are determined based on a type of the wake up receiver and/or a capability of the wake up receiver.

65. The method of any one of claims 61 to 64, wherein in a case where the wake up signal is transmitted by means of multi-carrier, the frequency domain information of the wake up signal comprises a subcarrier spacing associated with the wake up signal.

66. The method of claim 65, wherein
in response to a frequency domain position of the wake up signal is within a first BWP, a subcarrier spacing used for transmitting the wake up signal is the same as a subcarrier spacing configured for the first BWP.

67. The method of any one of claims 61 to 66, wherein a frequency domain position occupied by the wake up signal is located in a licensed spectrum, or a frequency domain position occupied by the wake up signal is located in an unlicensed spectrum.

68. The method of claim 60, wherein
the time domain information of the wake up signal comprises at least one of:
a radio frame associated with the wake up signal, a subframe associated with the wake up signal, a slot associated with the wake up signal, a symbol associated with the wake up signal or a time domain length corresponding to the wake up signal.

69. The method of any one of claims 36 to 68, further comprising:
transmitting, by the network device, first indication information, wherein the first indication information is used for indicating whether the terminal device receives the wake up signal by using the wake up receiver.

70. The method of any one of claims 36 to 39, wherein the first information is carried by one of:
a system message, a common radio resource control (RRC) signaling, a dedicated RRC signaling, a media access control control element (MAC CE) and a physical layer signaling.

71. A terminal device, comprising:
a communication unit, configured to receive first information;
wherein the first information comprises at least one of: power information of a wake up signal, spatial information of the wake up signal, a transmission parameter of the wake up signal or time-frequency resource information of the wake up signal; and
the first information is used for the terminal device to receive the wake up signal by using a wake up receiver.

72. A network device, comprising:
a communication unit, configured to transmit first information;
wherein the first information comprises at least one of: power information of a wake up signal, spatial information of the wake up signal, a transmission parameter of the wake up signal or time-frequency resource information of the wake up signal; and
the first information is used for a terminal device to receive the wake up signal using a wake up receiver.

73. A terminal device, comprising: a processor and a memory, wherein the memory is configured to store a computer program, and the processer is configured to call the computer program stored in the memory and run the computer program, to cause the terminal device to perform the method of any one of claims 1 to 35.

74. A network device, comprising: a processor and a memory, wherein the memory is configured to store a computer program, and the processer is configured to call the computer program stored in the memory and run the computer program, to cause the network device to perform the method of any one of claims 36 to 70.

75. A chip, comprising: a processor, wherein the processer is configured to call a computer program from a memory and run the computer program, to cause a device equipped with the chip to perform the method of any one of claims 1 to 35.

76. A chip, comprising: a processor, wherein the processer is configured to call a computer program from a memory and run the computer program, to cause a device equipped with the chip to perform the method of any one of claims 36 to 70.

77. A computer readable storage medium, configured to store a computer program, wherein the computer program causes a computer to perform the method of any one of claims 1 to 35.

78. A computer readable storage medium, configured to store a computer program, wherein the computer program causes a computer to perform the method of any one of claims 36 to 70.

79. A computer program product, comprising: computer program instructions, wherein the computer program instructions cause a computer to perform the method of any one of claims 1 to 35.

80. A computer program product, comprising: computer program instructions, wherein the computer program instructions cause a computer to perform the method of any one of claims 36 to 70.

81. A computer program, wherein the computer program causes a computer to perform the method of any one of claims 1 to 35.

82. A computer program, wherein the computer program causes a computer to perform the method of any one of claims 36 to 70.
